# EUROPÄISCHE PATENTSCHRIFT

(11) **EP 3 055 233 B1**
(45) Veröffentlichungstag und Bekanntmachung des Hinweises auf die Patenterteilung: **07.03.2018**
(21) Anmeldenummer: 14805775.5
(22) Anmeldetag: 10.10.2014
(51) Int. Cl.: B65G 23/08, B65G 39/09, B65G 13/06, B65G 13/11

(54) **FÖRDERROLLE UND FÖRDERANLAGE MIT FEUCHTIGKEITSSCHUTZ**
CONVEYOR ROLLER AND CONVEYOR SYSTEM WITH MOISTURE PROTECTION
ROULEAU DE TRANSPORT ET SYSTÈME DE TRANSPORT AVEC PROTECTION CONTRE L'HUMIDITÉ

(30) Priorität: 11.10.2013 AT 506572013
(43) Veröffentlichungstag der Anmeldung: 17.08.2016
(73) Patentinhaber: TGW Mechanics GmbH, 4600 Wels (AT)
(72) Erfinder: REISCHL, Josef, A-4623 Gunskirchen (AT)
(74) Vertreter: Burger, Hannes
(86) Internationale Anmeldenummer: PCT/AT2014/050242
(87) Internationale Veröffentlichungsnummer: WO 2015/051392

(56) Entgegenhaltungen:
- WO-A1-2011/032196
- WO-A1-2012/094690
- WO-A2-2013/000006
- DE-C- 957 376
- JP-A- S60 122 615

## Beschreibung

Die Erfindung betrifft eine Förderrolle mit einer Achse und einem um die Achse drehbar gelagerten Rollenkörper, einem im Rollenkörper angeordneten Motor zum Antrieb des Rollenkörpers und einer Schutzkappe, wobei die Schutzkappe einen scheibenförmigen ersten Abschnitt zur Abdeckung des Inneren des Rollenkörpers, welcher fix gegenüber der Achse angeordnet und normal zu dieser ausgerichtet ist, und einen dachartigen zweiten Abschnitts umfasst. Weiterhin betrifft die Erfindung eine Förderanlage, welche eine Förderrolle mit einer Achse, einem um die Achse drehbar gelagerten Rollenkörper, einem im Rollenkörper angeordneten Motor zum Antrieb des Rollenkörpers, einer Schutzkappe und einem aus dem Rollenkörper heraus geführten und mit dem Motor elektrisch verbundenen Anschlusskabel umfasst. Weiterhin umfasst die Förderanlage zwei beabstandet verlaufende Rahmenprofile, zwischen denen die Förderrolle angeordnet ist, eine entlang eines Rahmenprofils verlaufende Energieversorgungs- und/oder Datenleitung und eine auf dem Rahmenprofil angeordnete Anschlussbox, welche mit der Energieversorgungs- und/oder Datenleitung sowie mit dem Anschlusskabel elektrisch verbunden ist und welche unterhalb des dachartigen zweiten Abschnitt der Schutzkappe angeordnet ist, wobei das Anschlusskabel an einem Ende mit einem Stecker oder einer Buchse versehen ist, und wobei das Anschlusskabel in einem Bogen oder einer Schlaufe zu einer Buchse oder einem Stecker an der Anschlussbox geführt ist, und wobei die Stecker-Buchsenverbindung eine elektrische Schnittstelle bildet, und wobei der tiefste Punkt des Bogens / der Schlaufe unterhalb der genannten Schnittstelle zu liegen kommt.

Eine Förderrolle und eine Förderanlage der genannten Art sind grundsätzlich bekannt und werden in großer Zahl zum Fördern unterschiedlichster Objekte, insbesondere in Warenlagern und Warenverteilzentren eingesetzt. Ein sich bei dem Einsatz der Förderrolle beziehungsweise der Förderanlage stellendes Problem besteht darin, dass diese Schmutz und auch herunter tropfenden Flüssigkeiten ausgesetzt sind. Beispielsweise kann bei bruchgefährdeten Gebinden nicht mit letzter Sicherheit ausgeschlossen werden, dass diese beim Transport leckschlagen und die darin aufbewahrte Flüssigkeit ausläuft. Diese Flüssigkeiten können - insbesondere wenn sie korrosiv und/oder elektrisch leitend sind - großen Schaden an einer Förderrolle beziehungsweise Förderanlage anrichten, wenn sie zu den mechanischen und/oder elektrischen Komponenten derselben vordringt. Kurzfristige Schäden wie zum Beispiel Kurzschlüsse und Störungen der Anlagensteuerung sowie langfristige Schäden in Form von zum Beispiel Rost, korrodierten Kontakten und dergleichen können die Folge sein.

Aus der WO 2012/094690 A1 und WO 2013/00006 A2 ist eine Förderrolle bekannt, welche eine feststehende Achse und einen um die Achse drehbar gelagerten Rollenkörper, einen im Rollenkörper angeordneten Motor zum Antrieb des Rollenkörpers und ein Aufnahmegehäuse für eine Leiterplatte umfasst. Das Aufnahmegehäuse bildet eine Schutzkappe mit einem scheibenförmigen Abschnitt zur Abdeckung des Inneren des Rollenkörpers und einen radial zur Schutzkappe verlaufenden Vorsprung aus. Die Schutzkappe ist fix gegenüber der Achse angeordnet und normal zu dieser ausgerichtet. An die Leiterplatte ist ein Anschlusskabel mit einem Stecker angeschossen, welcher in eine Steckbuchse einer Anschlussbox einsteckbar ist, um den Motor und die Motorelektronik mit Strom zu versorgen.

Die WO 2012/094690 A1 offenbart insbesondere die Merkmale des jeweiligen Oberbegriffs der Ansprüche 1 und 10.

Die WO 2011/032196 A1 und JPS 60-122615 A offenbart eine Förderanlage mit Rahmenprofilen und zwischen diesen angeordneten Förderrollen, wovon zumindest einige der Förderrollen jeweils eine Achse, einen um die Achse drehbar gelagerten Rollenkörper, einen im Rollenkörper angeordneten Motor zum Antrieb des Rollenkörpers und ein aus dem Rollenkörper heraus geführtes und mit dem Motor elektrisch verbundenen Anschlusskabel umfassen. Der Motor der Förderrollen ist über das Anschlusskabel an eine gemeinsame Energieversorgungsleitung angeschlossen.

Eine Aufgabe der Erfindung besteht nun darin, eine verbesserte Förderrolle beziehungsweise eine verbesserte Förderanlage anzugeben. Insbesondere soll ein einfaches aber wirkungsvolles Konzept zur Vermeidung von Feuchteschäden an einer Förderrolle beziehungsweise einer Förderanlage angegeben werden. Insbesondere soll auch das Anschlusskabel vor einem Abscheuern an der drehenden Förderrolle geschützt werden.

Die Aufgabe der Erfindung wird mit einer Förderrolle gemäß Anspruch 1 gelöst.

Durch den ersten Abschnitt der Schutzkappe werden einerseits das Innere des Rollenkörpers, beispielsweise ein innenliegendes Wälzlager oder eine innenliegende elektronische Schaltung, durch den zweiten Abschnitt andererseits aber auch die darunter liegenden Komponenten, insbesondere die elektrische Anschlussbox der Förderanlage, vor herunter tropfenden Flüssigkeiten geschützt. Die Schutzkappe erfüllt damit einen Doppelnutzen. Generell kann die Schutzkappe ein- oder mehrteilig ausgeführt und/oder im Spritzgussverfahren hergestellt sein. Somit kann auch dann ein störungsfreier Betrieb der Förderrolle/Förderanlage sichergestellt werden, wenn Flüssigkeit beinhaltende Gebinde beim Transport auf der Förderanlage zu Bruch gehen oder schon zerbrochen in die Förderanlage eingeschleust werden. Schäden wie zum Beispiel Kurzschlüsse, Störungen, Rost sowie korrodierte Kontakte können so vermieden werden, ohne dass dazu unbedingt (teure) Dichtungen an den betroffenen Stellen notwendig wären. Somit kann eine geforderte Schutzklasse im üblichen Einsatzbereich der Förderrolle bzw. Förderanlage ohne zusätzliche Anordnung von Dichtungen beispielweise am Stecker, zwischen Gehäuseteilen der Anschlussbox und dgl. eingehalten werden. Selbstverständlich ist der Einsatz von Dichtungen aber nicht ausgeschlossen.

Die Förderrolle umfasst einen im Rollenkörper angeordneten Motor zum Antrieb des Rollenkörpers und ein aus dem Rollenkörper heraus geführtes und mit dem Motor elektrisch verbundenes Anschlusskabel. Dadurch entsteht ein kompakter Aufbau einer Förderrolle. Prinzipiell kann die Schutzkappe aber natürlich auch bei leerlaufenden (motorlosen) Förderrollen eingesetzt werden.

Mit der Führungsvorrichtung und/oder Befestigungsvorrichtung am zweiten Abschnitt kann das Anschlusskabel in einer vorgegebenen Weise verlegt werden. Konkret kann diese durch eine Nut gebildet sein, in der das Anschlusskabel geführt/fixiert ist. Andere Mittel für die Kabelverlegung sind daher eigentlich nicht mehr notwendig. Selbstverständlich kann die Führungsvorrichtung und/oder Befestigungsvorrichtung auch beispielsweise durch eine Kabelschelle gebildet sein. In vielen Fällen ist es erwünscht, den Abstand der Förderrolle zur Anschlussbox möglichst gering zu halten, beispielsweise um damit die Höhe der Rahmenprofile gering und/oder das Anschlusskabel kurz zu halten. Dennoch sollte ein Scheuern des Anschlusskabels an der drehenden Förderrolle verhindert werden. Neben dem Feuchtigkeitsschutz oder alternativ dazu erfüllt der zweite Abschnitt der Schutzkappe bei dieser Ausführungsform die Funktion des mechanischen Schutzes des Anschlusskabels. Die Motivation zur Anwendung des zweiten Abschnitts kann somit auch im mechanischen Schutz des Anschlusskabels liegen. Die Schutzkappe erfüllt auf die angegebene Weise nun einen Dreifachnutzen. Weitere vorteilhafte Ausgestaltungen und Weiterbildungen der Erfindung ergeben sich aus den Unteransprüchen sowie aus der Beschreibung in Zusammenschau mit den Figuren. Günstig ist es, wenn der zweite Abschnitt der Schutzkappe in Einbaulage der Förderrolle unterhalb des Rollenkörpers verläuft. Dadurch können unterhalb des genannten Abschnitts liegende Anlagenkomponenten vor herunter tropfenden Flüssigkeiten geschützt werden. Prinzipiell kann der zweite Abschnitt aber auch in eine andere Lage gedreht werden, um zum Beispiel einen Spritzschutz für Anlagenkomponenten zu realisieren.

In diesem Zusammenhang ist es insbesondere von Vorteil, wenn die Führungsvorrichtung und/oder Befestigungsvorrichtung in der Einbaulage unten am zweiten Abschnitt angeordnet ist. Ist die Führungsvorrichtung und/oder Befestigungsvorrichtung durch eine Nut gebildet, so ist es von Vorteil, wenn die Nut in Einbaulage der Förderrolle nach unten hin offen ist. Dadurch kann das Anschlusskabel der Förderrolle leicht in der Nut fixiert werden und ist dennoch wirksam vor herunter tropfenden Flüssigkeiten geschützt.

In einer erfindungsgemäßen Ausführungsform der Förderanlage ist der genannte Vorsprung der Anschlussbox unterhalb des rinnen- oder dachartigen zweiten Abschnitts der Schutzkappe angeordnet. Bei dieser Variante werden die beiden zuvor genannten Maßnahmen kombiniert, wodurch ein besonders guter Schutz vor herunter tropfenden Flüssigkeiten resultiert, weil die elektrische Schnittstelle zwischen Anschlusskabel und Anschlussbox einerseits durch den Vorsprung der Anschlussbox, andererseits auch durch den rinnen- oder dachartigen zweiten Abschnitt der Schutzkappe geschützt wird. Vorteilhaft überragt der zweite Abschnitt der Schutzkappe dabei den dachartigen Vorsprung der Anschlussbox. Somit kann eine geforderte Schutzklasse ohne den Einsatz von Dichtungen erreicht werden.

Von Vorteil ist auch, wenn das Anschlusskabel in einem Bogen oder einer Schlaufe zur elektrischen Schnittstelle der Anschlussbox geführt ist, wobei der tiefste Punkt des Bogens / der Schlaufe unterhalb der genannten Schnittstelle zu liegen kommt. Durch die spezielle Kabelführung können an dem Anschlusskabel herunterlaufende Flüssigkeiten von der Anschlussbox fern gehalten werden, da diese vom Bogen / von der Schlaufe herunter tropfen. Die vorgeschlagenen Maßnahmen können dabei einzeln oder in Kombination angewandt werden und verbessern allesamt den Schutz der Förderrolle beziehungsweise Förderanlage vor herunter tropfenden Flüssigkeiten.

Weiterhin wird die Aufgabe der Erfindung mit einer Förderanlage der eingangs genannten Art gelöst, bei der die Anschlussbox einen dachartigen Vorsprung umfasst und die elektrische Schnittstelle zwischen dem Anschlusskabel und der Anschlussbox unterhalb des dachartigen Vorsprungs angeordnet ist. Durch die spezielle Kabelführung können an dem Anschlusskabel herunterlaufende Flüssigkeiten von der Anschlussbox fern gehalten werden, da diese vom Bogen / von der Schlaufe herunter tropfen. Dadurch ist die Schnittstelle, welche beispielsweise durch eine Stecker-/Buchsenverbindung gebildet ist, gut vor herunter tropfenden Flüssigkeiten geschützt, beziehungsweise kann eine geforderte Schutzklasse ohne den Einsatz von Dichtungen erreicht werden.

Zum besseren Verständnis der Erfindung wird diese anhand der nachfolgenden Figuren näher erläutert. Es zeigen
- Fig. 1: eine beispielhafte Motorrolle mit der montierten Schutzkappe schräg von unten gesehen;
- Fig. 2: die in Fig. 1 dargestellte Motorrolle in Explosionsdarstellung;
- Fig. 3: einen Ausschnitt aus einer beispielhaften Förderanlage schräg von oben gesehen;
- Fig. 4: wie Fig. 3, nur schräg von unten gesehen und
- Fig. 5: wie Fig. 3, nur in Vorderansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

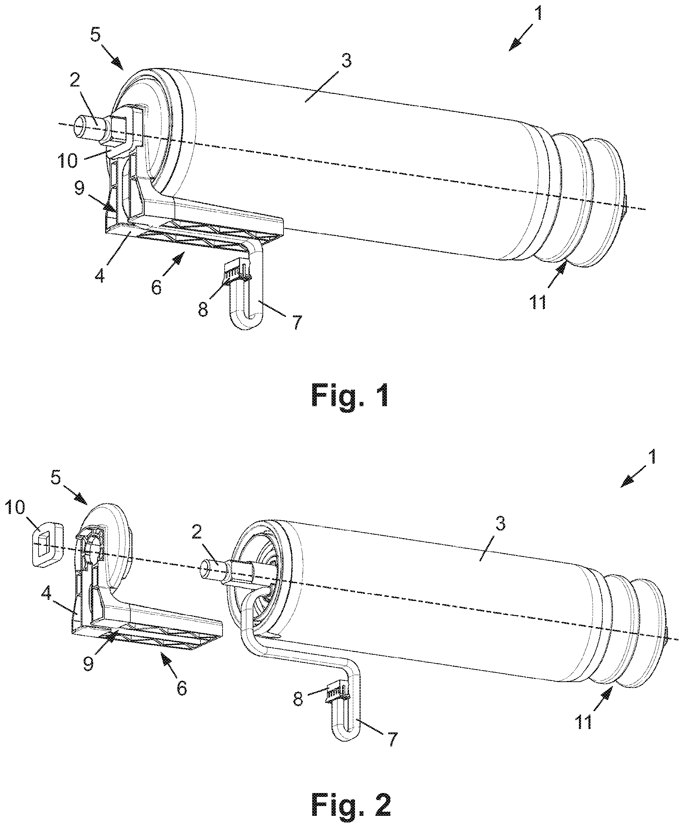

Die Figuren 1 und 2 zeigen eine beispielhafte Förderrolle 1 in Schrägansicht (Fig. 1) und in Explosionsdarstellung (Fig. 2). Die in den Figuren 1 und 2 dargestellte Förderrolle 1 ist relativ kurz. Selbstverständlich beziehen sich die folgenden Ausführungen auf jegliche Längen von Förderrollen.

Die Förderrolle 1 umfasst eine Achse 2 und einen Rollenkörper 3 sowie eine Schutzkappe 4. Die Schutzkappe 4 umfasst einen scheibenförmigen ersten Abschnitt 5 zur Abdeckung des Inneren des Rollenkörpers 3, welcher fix gegenüber der Achse 2 angeordnet und normal zu dieser ausgerichtet ist. Weiterhin umfasst die Schutzkappe 4 einen rinnen- oder dachartigen zweiten Abschnitt 6, der schräg (nach unten) zur Achse 2 angeordnet ist und über eine Teillänge des Rollenkörpers 3 radial beabstandet zu demselben verläuft. Von oben gesehen decken sich in diesem Beispiel die Achse 2 und die Längsachse des zweiten Abschnitts 6. Dies ist jedoch nicht zwingend. Die Längsachse des zweiten Abschnitts 6 könnte auch beabstandet und parallel zu der Achse 2 oder schräg dazu verlaufen.

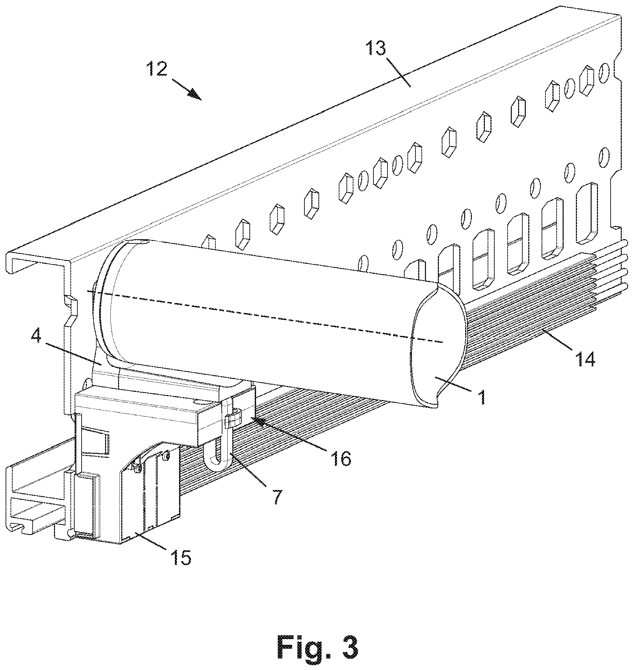

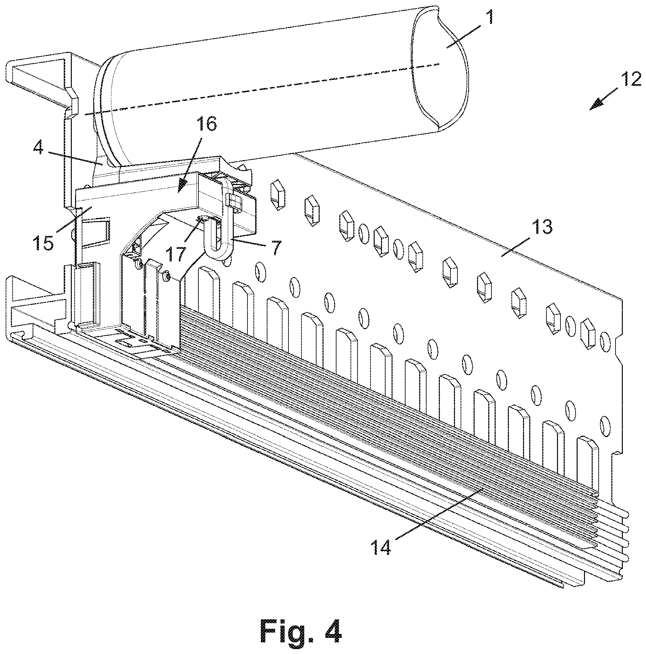

Durch den ersten Abschnitt 5 der Schutzkappe 4 wird das Innere des Rollenkörpers 3, beispielsweise ein innenliegendes Wälzlager oder eine innenliegende elektronische Schaltung (nicht dargestellt) geschützt. Durch den zweiten Abschnitt 6 der Schutzkappe 4 werden unter der Förderrolle 1 angeordnete Komponenten geschützt (siehe auch Fig. 3 bis 5). Vorteilhaft verläuft der zweite Abschnitt 6 in Einbaulage der Förderrolle 1 dazu unterhalb des Rollenkörpers 3. Die Schutzkappe 4 erfüllt damit einen Doppelnutzen. Prinzipiell kann der zweite Abschnitt 6 der Schutzkappe 4 aber auch in eine andere Lage gedreht werden, um zum Beispiel einen Spritzschutz für Anlagenkomponenten zu realisieren.

Die beispielhaft dargestellte Förderrolle 1 umfasst einen im Rollenkörper 3 angeordneten Motor (nicht dargestellt) zum Antrieb des Rollenkörpers 3 und ein aus dem Rollenkörper 3 heraus geführtes und mit dem Motor mit einem ersten Ende elektrisch verbundenes Anschlusskabel 7. Am Anschlusskabel 7 ist in diesem Beispiel an einem zweiten Ende ein Stecker 8 befestigt.

Der zweite Abschnitt 6 der Schutzkappe 4 weist eine Führungsvorrichtung und/oder Befestigungsvorrichtung auf, welche das Anschlusskabel 7 zwischen dem ersten und zweiten Ende fixiert/führt. Diese ist hier konkret durch eine Nut 9 gebildet, in der das Anschlusskabel 7 fixiert/geführt ist. Insbesondere ist die Nut 9 in Einbaulage der Förderrolle 1 - so wie dies in den Fig. 1 und 2 dargestellt ist - nach unten hin offen. Dadurch kann das Anschlusskabel 7 der Förderrolle 1 leicht verlegt werden und ist wirksam vor herunter tropfenden Flüssigkeiten geschützt. Andere Mittel für die Kabelverlegung sind daher an sich nicht mehr notwendig. Die Schutzkappe 4 erfüllt auf diese Weise einen Dreifachnutzen. Selbstverständlich kann Führungsvorrichtung und/oder Befestigungsvorrichtung beispielsweise auch durch eine Kabelschelle gebildet sein, die vorteilhaft am zweiten Abschnitt 6 unten angeordnet ist.

Schließlich zeigen die Fig. 1 und 2 noch eine optionale Scheibe 10 zur Montage der Förderrolle 1 in einer Förderanlage, sowie optionale Rillen 11 im Rollenkörper 3, in welchen beispielsweise Rundriemen zum Antrieb benachbarter und nicht motorisierter Förderrollen geführt sein können.

Zu beachten ist in der Fig. 2 insbesondere, dass das Anschlusskabel 7 in der Einbaulage gezeichnet ist. Die Schutzkappe 4 kann daher nicht einfach durch Aufschieben auf die gezeigte Anordnung montiert werden, sondern es müsste dazu das Anschlusskabel 7 durch die in der Schutzkappe 4 dafür vorgesehene Öffnung gefädelt werden.

Die Figuren 3 bis 5 zeigen nun einen Ausschnitt aus einer beispielhaften Förderanlage 12. Die Förderanlage 12 umfasst eine Förderrolle 1 und zwei beabstandet verlaufende Rahmenprofile 13 zwischen denen die Förderrolle 1 angeordnet ist (Anmerkung: in den Fig. 3 bis 5 ist der besseren Übersicht halber nur eines der beiden Rahmenprofile 13 dargestellt). Weiterhin umfasst die Förderanlage 12 eine entlang des Rahmenprofils 13 verlaufende Energieversorgungs- und/oder Datenleitung 14 sowie eine auf dem Rahmenprofil 13 angeordnete Anschlussbox 15, welche mit der Energieversorgungs- und/oder Datenleitung 14 und mit dem Anschlusskabel 7 der Förderrolle 1 elektrisch verbunden ist. Beispielsweise kann die elektrische Verbindung zwischen der Anschlussbox 15 und der Energieversorgungs- und/oder Datenleitung 14 mit Hilfe von federnden, auf den blanken Leitern des Kabels 13 aufliegenden, Kontakten oder zum Beispiel auch mit Hilfe von Schneidklemmkontakten erfolgen. Die Anschlussbox 15 kann auch eine elektronische Schaltung zur Steuerung des Motors der Förderrolle 1 und/oder zur Kommunikation mit einer übergeordneten Steuerung enthalten.

Bei dem in den Fig. 3 bis 5 dargestellten Beispiel ist die elektrische Schnittstelle zwischen Anschlusskabel 7 und Anschlussbox 15, welche hier konkret durch eine Verbindung eines Steckers 8 mit einer Buchse 17 gebildet ist, unterhalb des rinnen- oder dachartigen zweiten Abschnitts 6 der Schutzkappe 4 angeordnet. Weiterhin ist die Schnittstelle 8, 17 auch unter einem dachartigen Vorsprung 16 der Anschlussbox 15 angeordnet.

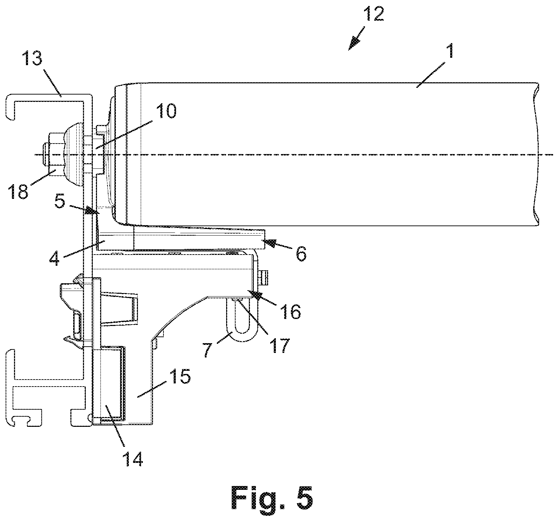

In dem konkret dargestellten Beispiel werden die beiden zuvor genannten Maßnahmen, welche auch alleine angewandt werden können, somit kombiniert. Das heißt, dass der genannte Vorsprung 16 der Anschlussbox 15 unterhalb des rinnen- oder dachartigen zweiten Abschnitts 6 der Schutzkappe 4 angeordnet ist. Dadurch resultiert ein besonders guter Schutz vor herunter tropfenden Flüssigkeiten, weil die elektrische Schnittstelle 8, 17 zwischen Anschlusskabel 7 und Anschlussbox 15 einerseits durch den Vorsprung 16 der Anschlussbox 15, andererseits auch durch den rinnen- oder dachartigen zweiten Abschnitt 6 der Schutzkappe 4 geschützt wird. Vorteilhaft überragt der zweite Abschnitt 6 der Schutzkappe 4 dabei, wie insbesondere in Fig. 5 dargestellt, den dachartigen Vorsprung 16 der Anschlussbox 15 (vorne und/oder seitlich).

In dem in den Figuren dargestellten Beispiel ist die Buchse 17 direkt am beziehungsweise im Gehäuse der Anschlussbox 15 angeordnet. Denkbar wäre natürlich auch, dass die Buchse 17 an einem aus dem Gehäuse der Anschlussbox 15 heraus geführten Kabel angeordnet ist. Selbstverständlich könnte am Anschlusskabel 7 anstelle des Steckers 8 auch eine Buchse und an der Anschlussbox 15 ein Stecker anstelle der Buchse 17 angeordnet sein.

Eine weitere Maßnahme zum Schutz vor herunter tropfenden Flüssigkeiten, die in den Fig. 1 bis 5 dargestellt ist und alleine oder in beliebiger Kombination mit den zuvor genannten Maßnahmen angewandt werden kann, besteht darin, dass das Anschlusskabel 7 in einem Bogen zur elektrischen Schnittstelle 8, 17 der Anschlussbox 15 geführt ist, wobei der tiefste Punkt des Bogens unterhalb der genannten Schnittstelle 8, 17 zu liegen kommt. Durch die spezielle Kabelführung können an dem Anschlusskabel 7 herunterlaufende Flüssigkeiten von der Anschlussbox 15 fern gehalten werden, da diese vom Bogen herunter tropfen. Anstelle des Bogens kann natürlich sinngemäß auch eine Schlaufe in der Kabelführung vorgesehen sein.

In den Figuren 3 bis 5 ist die Förderrolle 1 mit dem Rahmenprofil 13 mit Hilfe der Mutter 18 verschraubt. Selbstverständlich könnte die Förderrolle 1 aber auch auf andere Art und Weise am beziehungsweise im Rahmenprofil 13 befestigt sein.

Die Ausführungsbeispiele zeigen mögliche Ausführungsvarianten eines erfindungsgemäßen Förderrolle 1 respektive einer Förderanlage 12, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass eine Förderrolle 1 respektive eine Förderanlage 12 in der Realität auch mehr oder weniger Bestandteile als dargestellt umfassen kann.

Der Ordnung halber sei abschließend darauf hingewiesen, dass zum besseren Verständnis des Aufbaus der Förderrolle 1 respektive eine Förderanlage 12 diese beziehungsweise dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Förderrolle
- 2: Achse
- 3: Rollenkörper
- 4: Schutzkappe
- 5: erster Abschnitt der Schutzkappe

- 6: zweiter Abschnitt der Schutzkappe
- 7: Anschlusskabel
- 8: Stecker
- 9: Nut für Anschlusskabel
- 10: Scheibe

- 11: Rille für Riemen
- 12: Förderanlage
- 13: Rahmenprofil
- 14: Energieversorgungs- und/oder Datenleitung
- 15: Anschlussbox

- 16: dachartiger Vorsprung
- 17: Buchse
- 18: Mutter

## Patentansprüche

1. Förderrolle (1), umfassend eine Achse (2) und einen um die Achse (2) drehbar gelagerten Rollenkörper (3), einen im Rollenkörper (3) angeordneten Motor zum Antrieb des Rollenkörpers (3) und eine Schutzkappe (4), wobei die Schutzkappe (4) umfasst:
- einen scheibenförmigen ersten Abschnitt (5) zur Abdeckung des Inneren des Rollenkörpers (3), welcher fix gegenüber der Achse (2) angeordnet und normal zu dieser ausgerichtet ist, und
- einen rinnen- oder dachartigen zweiten Abschnitt (6), der schräg zur Achse (2) angeordnet ist und über eine Teillänge des Rollenkörpers (3) radial beabstandet zu demselben verläuft, **dadurch gekennzeichnet, dass** die Förderolle ein aus dem Rollenkörper heraus geführtes Anschlusskabel (7), welches mit einem ersten Ende mit dem Motor elektrisch verbunden und durch eine in der Schutzkappe (4) vorgesehene Öffnung gefädelt ist, umfasst, und, dass der zweite Abschnitt (6) eine Führungsvorrichtung und/oder Befestigungsvorrichtung, insbesondere eine Nut (9), aufweist, in der das Anschlusskabel (7) geführt/fixiert ist.

2. Förderrolle (1) nach Anspruch 1, **dadurch gekennzeichnet, dass** der zweite Abschnitt (6) in Einbaulage der Förderrolle (1) unterhalb des Rollenkörpers (3) verläuft.

3. Förderrolle (1) nach Anspruch 1, **dadurch gekennzeichnet, dass** die Führungsvorrichtung und/oder Befestigungsvorrichtung unten am zweiten Abschnitt (6) angeordnet ist, insbesondere dass die Nut (9) in Einbaulage der Förderrolle (1) nach unten hin offen ist.

4. Förderanlage (12), umfassend eine Förderrolle (1) nach Anspruch 1 oder 3, **gekennzeichnet durch**
- zwei beabstandet verlaufende Rahmenprofile (13) zwischen denen die Förderrolle (1) angeordnet ist,
- eine entlang eines Rahmenprofils (13) verlaufende Energieversorgungs- und/oder Datenleitung (14) und
- eine auf dem Rahmenprofil (13) angeordnete Anschlussbox (15), welche mit der Energieversorgungs- und/oder Datenleitung (14) sowie mit dem Anschlusskabel (7) der Förderrolle (1) elektrisch verbunden ist.

5. Förderanlage (12) nach Anspruch 4, **dadurch gekennzeichnet, dass** eine elektrische Schnittstelle (8, 17) zwischen Anschlusskabel (7) und Anschlussbox (15) unterhalb des rinnen- oder dachartigen zweiten Abschnitts (6) der Schutzkappe (4) angeordnet ist.

6. Förderanlage (12) nach Anspruch 4 oder 5, **dadurch gekennzeichnet, dass** die Anschlussbox (15) einen dachartigen Vorsprung (16) aufweist und die elektrische Schnittstelle (8, 17) zwischen Anschlusskabel (7) und Anschlussbox (15) unterhalb des genannten Vorsprungs (16) angeordnet ist.

7. Förderanlage (12) nach Anspruch 6, **dadurch gekennzeichnet, dass** der genannte Vorsprung (16) der Anschlussbox (15) unterhalb des rinnen- oder dachartigen zweiten Abschnitts (6) der Schutzkappe (4) angeordnet ist.

8. Förderanlage (12) nach einem der Ansprüche 5 bis 7, **dadurch gekennzeichnet, dass** die elektrische Schnittstelle (8, 17) zwischen Anschlusskabel (7) und Anschlussbox (15) durch eine Stecker-/Buchsenverbindung gebildet ist.

9. Förderanlage (12) nach einem der Ansprüche 4 bis 8, **dadurch gekennzeichnet, dass** das Anschlusskabel (7) in einem Bogen oder einer Schlaufe zur elektrischen Schnittstelle (8, 17) der Anschlussbox (15) geführt ist, wobei der tiefste Punkt des Bogens / der Schlaufe unterhalb der genannten Schnittstelle (8, 17) zu liegen kommt.

10. Förderanlage (12), umfassend
- eine Förderrolle (1) mit einer Achse, einem um die Achse (2) drehbar gelagerten Rollenkörper (3), einem im Rollenkörper (3) angeordneten Motor zum Antrieb des Rollenkörpers (3) und einer Schutzkappe (4), wobei die Schutzkappe (4) einen scheibenförmigen ersten Abschnitt (5) zur Abdeckung des Inneren des Rollenkörpers (3), welcher fix gegenüber der Achse (2) angeordnet und normal zu dieser ausgerichtet ist, und einen dachartigen zweiten Abschnitts (6), der schräg zur Achse (2) angeordnet ist und über eine Teillänge des Rollenkörpers (3) radial beabstandet zu demselben verläuft, umfasst,
- zwei beabstandet verlaufende Rahmenprofile (13) zwischen denen die Förderrolle (1) angeordnet ist,
- eine entlang eines Rahmenprofils (13) verlaufende Energieversorgungs- und/oder Datenleitung (14) und
- eine auf dem Rahmenprofil (13) angeordnete Anschlussbox (15), welche mit der Energieversorgungs- und/oder Datenleitung (14) sowie mit einem Anschlusskabel (7) elektrisch verbunden ist und welche unterhalb des dachartigen zweiten Abschnitt (6) der Schutzkappe (4) angeordnet ist,
- wobei das Anschlusskabel (7) an einem Ende mit einem Stecker (8) oder einer Buchse (17) versehen ist, und wobei das Anschlusskabel (7) in einem Bogen oder einer Schlaufe zu einer Buchse (17) oder einem Stecker (8) an der Anschlussbox (15) geführt ist, und wobei die Stecker-/Buchsenverbindung eine elektrische Schnittstelle (8, 17) bildet, und wobei der tiefste Punkt des Bogens / der Schlaufe unterhalb der genannten Schnittstelle (8, 17) zu liegen kommt, **dadurch gekennzeichnet, dass** die Förderrolle das Anschlusskabel (7) umfasst, welches mit dem Motor elektrisch verbunden ist, und welches aus dem Rollenkörper (3) herausgeführt und durch eine in der Schutzkappe (4) vorgesehene Öffnung gefädelt ist, und dass die Anschlussbox (15) einen dachartigen Vorsprung (16) umfasst und die elektrische Schnittstelle (8, 17) zwischen dem Anschlusskabel (7) und der Anschlussbox (15) unterhalb des dachartigen Vorsprungs (16) angeordnet ist.

## Claims

1. A conveyor roller (1), comprising an axle (2) and a roller body (3) mounted so as to be rotatable about the axle (2), a motor that is arranged in the roller body (3) and serves for driving the roller body (3) and a protective cap (4), wherein the protective cap (4) comprises:
- a disk-shaped first section (5) for covering the interior of the roller body (3), which is arranged fixedly relative to the axle (2) and oriented perpendicular thereto, and
- a channel-like or roof-like second section (6), which is arranged angularly to the axle (2) and extends over a partial length of the roller body (3) at a radial distance therefrom,
**characterized in that**
the conveyor roller comprises a connecting cable (7) that leads out of the roller body, wherein said connecting cable is electrically connected to the motor with a first end and threaded through an opening provided in the protective cap (4), and **in that** the second section (6) features a guiding device and/or fixing device, particularly a groove (9), in which the connecting cable (7) is guided/fixed.

2. The conveyor roller (1) according to claim 1, **characterized in that** the second section (6) extends underneath the roller body (3) in the installed position of the conveyor roller (1).

3. The conveyor roller (1) according to claim 1, **characterized in that** the guiding device and/or fixing device is arranged on the bottom of the second section (6), particularly such that the groove (9) is open toward the bottom in the installed position of the conveyor roller (1).

4. A conveyor system (12) comprising a conveyor roller (1) according to claim 1 or 3, **characterized by**
- two frame profiles (13) extending at a distance from one another, between which the conveyor roller (1) is arranged,
- an energy supply and/or data line (14) extending along a frame profile (13), and
- a junction box (15) arranged on the frame profile (13), which is electrically connected to the energy supply and/or data line (14), as well as to the connecting cable (7) of the conveyor roller (1).

5. The conveyor system (12) according to claim 4, **characterized in that** an electrical interface (8, 17) between the connecting cable (7) and the junction box (15) is arranged underneath the channel-like or roof-like second section (6) of the protective cap (4).

6. The conveyor system (12) according to claim 4 or 5, **characterized in that** the junction box (15) features a roof-like projection (16) and the electrical interface (8, 17) between the connecting cable (7) and the junction box (15) is arranged underneath said projection (16).

7. The conveyor system (12) according to claim 6, **characterized in that** the projection (16) of the junction box (15) is arranged underneath the channel-like or roof-like second section (6) of the protective cap (4).

8. The conveyor system (12) according to one of claims 5 to 7, **characterized in that** the electrical interface (8, 17) between the connecting cable (7) and the junction box (15) is realized in the form of a plug/socket connection.

9. The conveyor system (12) according to one of claims 4 to 8, **characterized in that** the connecting cable (7) is routed to the electrical interface (8, 17) of the junction box (15) in the form of an arc or a loop, wherein the lowest point of the arc/the loop lies underneath said interface (8, 17).

10. A conveyor system (12), comprising
- a conveyor roller (1) with an axle, a roller body (3) mounted so as to be rotatable about the axle (2), a motor that is arranged in the roller body (3) and serves for driving the roller body (3) and a protective cap (4), wherein the protective cap (4) comprises a disk-shaped first section (5) for covering the interior of the roller body (3), which is arranged fixedly relative to the axle (2) and oriented perpendicular thereto, and a roof-like second section (6), which is arranged angularly to the axle (2) and extends over a partial length of the roller body (3) at a radial distance therefrom,
- two frame profiles (13) extending at a distance from one another, between which the conveyor roller (1) is arranged,
- an energy supply and/or data line (14) extending along a frame profile (13), and
- a junction box (15) arranged on the frame profile (13), which is electrically connected to the energy supply and/or data line (14), as well as to the connecting cable (7), and arranged underneath the roof-like second section (6) of the protective cap (4),
- wherein the connecting cable (7) is on one end provided with a plug (8) or a socket (17), wherein the connecting cable (7) is routed to a socket (17) or a plug (8) on the junction box (15) in the form of an arc or a loop, wherein the plug/socket connection forms an electrical interface (8, 17), and wherein the lowest point of the arc/the loop lies underneath said interface (8, 17), **characterized in that** the conveyor roller comprises the connecting cable (7), which is electrically connected to the motor, leads out of the roller body (3) and is threaded through an opening provided in the protective cap (4), and **in that** the junction box (15) comprises a roof-like projection (16) and the electrical interface (8, 17) between the connecting cable (7) and the junction box (15) is arranged underneath the roof-like projection (16).

## Revendications

1. Rouleau de transport (1), comprenant un axe (2) et un corps de rouleau (3) supporté en rotation autour de l'axe (2), un moteur disposé dans le corps de rouleau (3) pour l'entraînement du corps de rouleau (3) et un capuchon de protection (4), le capuchon de protection (4) comprenant :
- un premier tronçon (5) en forme de disque, qui est destiné à recouvrir l'intérieur du corps de rouleau (3) et qui est disposé de façon fixe par rapport à l'axe (2), et qui est orienté de façon orthogonale par rapport à celui-ci, et
- un deuxième tronçon (6) en forme de gouttière ou de toit qui est disposé obliquement par rapport à l'axe (2) et s'étend, sur une longueur partielle du corps de rouleau (3), de façon radialement espacée de celui-ci, **caractérisé en ce que** le rouleau de transport comprend un câble de jonction extrait du corps de rouleau (7) qui est raccordé électriquement au moteur par une première extrémité et qui est enfilé à travers une ouverture prévue dans le capuchon de protection (4), et **en ce que** le deuxième tronçon (6) présente un dispositif de guidage et/ou un dispositif de fixation, en particulier une rainure (9), dans lequel le câble de jonction (7) est guidé/fixé.

2. Rouleau de transport (1) selon la revendication 1, **caractérisé en ce que**, dans la position de montage du rouleau de transport (1), le deuxième tronçon (6) s'étend au-dessous du corps de rouleau (3).

3. Rouleau de transport (1) selon la revendication 1, **caractérisé en ce que** le dispositif de guidage et/ou le dispositif de fixation est disposé en bas sur le deuxième tronçon (6), en particulier **en ce que**, dans la position de montage du rouleau de transport (1), la rainure (9) est ouverte vers le bas.

4. Installation de transport (12), comprenant un rouleau de transport (1) selon la revendication 1 ou 3, **caractérisée par**
- deux profilés de cadre (13) s'étendant de façon espacée, entre lesquels le rouleau de transport (1) est disposé,
- une ligne d'alimentation en énergie et/ou de données (14) s'étendant le long d'un profilé de cadre (13), et
- une boîte de jonction (15), disposée sur le profilé de cadre (13), qui est raccordée électriquement à la ligne d'alimentation en énergie et/ou de données (14) ainsi qu'au câble de jonction (7) du rouleau de transport (1).

5. Installation de transport (12) selon la revendication 4, **caractérisée en ce qu'**une interface (8, 17) électrique est disposée entre le câble de jonction (7) et la boîte de jonction (15) au-dessous du deuxième tronçon (6) en forme de gouttière ou de toit du capuchon de protection (4).

6. Installation de transport (12) selon la revendication 4 ou 5, **caractérisée en ce que** la boîte de jonction (15) présente une saillie (16) en forme de toit, et l'interface (8, 17) électrique est disposée entre le câble de jonction (7) et la boîte de jonction (15) au-dessous de ladite saillie (16).

7. Installation de transport (12) selon la revendication 6, **caractérisée en ce que** ladite saillie (16) de la boîte de jonction (15) est disposée au-dessous du deuxième tronçon (6) en forme de gouttière ou de toit du capuchon de protection (4).

8. Installation de transport (12) selon l'une des revendications 5 à 7, **caractérisée en ce que** l'interface (8, 17) électrique est formée entre le câble de jonction (7) et la boîte de jonction (15) par un raccordement par fiche/douille.

9. Installation de transport (12) selon l'une des revendications 4 à 8, **caractérisée en ce que** le câble de jonction (7) est guidé dans un arc ou une boucle vers l'interface (8, 17) électrique de la boîte de jonction (15), le point le plus bas de l'arc / de la boucle venant au-dessous de ladite interface (8, 17).

10. Installation de transport (12), comprenant
- un rouleau de transport (1) avec un axe, un corps de rouleau (3) supporté en rotation autour de l'axe (2), un moteur disposé dans le corps de rouleau (3) pour l'entraînement du corps de rouleau (3) et un capuchon de protection (4), le capuchon de protection (4) comprenant un premier tronçon (5) en forme de disque, qui est destiné à recouvrir l'intérieur du corps de rouleau (3) et qui est disposé de façon fixe par rapport à l'axe (2), et qui est orienté de façon orthogonale par rapport à celui-ci, et un deuxième tronçon (6) en forme de toit qui est disposé obliquement par rapport à l'axe (2) et s'étend, sur une longueur partielle du corps de rouleau (3), de façon radialement espacée de celui-ci,
- deux profilés de cadre (13) disposés de façon espacée, entre lesquels est disposé le rouleau de transport (1),
- une ligne d'alimentation en énergie et/ou de données (14) disposée le long d'un profilé de cadre (13), et
- une boîte de jonction (15), disposée sur le profilé de cadre (13), qui est raccordée électriquement à la ligne d'alimentation en énergie et/ou de données (14) ainsi qu'à un câble de jonction (7) et qui est disposée au-dessous du deuxième tronçon (6) du capuchon de protection (4) en forme de toit,
- le câble de jonction (7) étant, à une extrémité, muni d'une fiche (8) ou d'une douille (17), et le câble de jonction (7) étant guidé dans un arc ou une boucle vers une douille (17) ou une fiche (8) sur la boîte de jonction (15), et le raccordement par fiche/douille formant une interface (8, 17) électrique, et le point le plus bas de l'arc / de la boucle venant au-dessous de ladite interface (8, 17), **caractérisée en ce que** le rouleau de transport comprend le câble de jonction (7) qui est raccordé électriquement au moteur et qui est extrait du corps de rouleau (3) et enfilé à travers une ouverture prévue dans le capuchon de protection (4), et **en ce que** la boîte de jonction (15) comprend une saillie (16) en forme de toit, et l'interface (8, 17) électrique est disposée entre le câble de jonction (7) et la boîte de jonction (15) au-dessous de la saillie (16) en forme de toit.
